Europäisches Patentamt

European Patent Office

Office européen des brevets

(19)

(11) EP 0 666 655 B1

(12) **FASCICULE DE BREVET EUROPEEN**

(45) Date de publication et mention
de la délivrance du brevet:
**06.10.1999 Bulletin 1999/40**

(51) Int Cl.6: **H04B 3/23**

(21) Numéro de dépôt: **95400183.0**

(22) Date de dépôt: **27.01.1995**

(54) **Procédé et dispositif d'analyse d'un signal de retour et annuleur d'écho adaptatif en comportant application**

Verfahren und Einrichtung zur Analyse eines Echosignals und adaptiver Echokompensator welcher diese anwendet

Method and apparatus for analyzing a return signal and adaptive echo canceller using the same

(84) Etats contractants désignés:
**DE GB**

(30) Priorité: **02.02.1994 FR 9401160**

(43) Date de publication de la demande:
**09.08.1995 Bulletin 1995/32**

(73) Titulaire: **FRANCE TELECOM**
**75015 Paris (FR)**

(72) Inventeurs:
• **Prado, Jacques**
**F-91520 Egly (FR)**
• **Moulines, Eric**
**F-75019 Paris (FR)**

(74) Mandataire: **Loisel, Bertrand**
**Cabinet Plasseraud,**
**84, rue d'Amsterdam**
**75440 Paris Cédex 09 (FR)**

(56) Documents cités:
**US-A- 4 672 665       US-A- 4 918 727**

• **IEEE GLOBAL TELECOMMUNICATIONS CONFERENCE, vol.3, 26 Novembre 1984, NEW YORK pages 1569 - 1574 MONTAGNA ET AL. 'A FAST ADAPTIVE ECHO CANCELER WITH DELAY ESTIMATION FOR TIME VARIANT TELEPHONE CIRCUITS'**

EP 0 666 655 B1

## Description

La présente invention concerne un procédé et un dispositif pour détecter, dans un signal de retour, la présence de composantes autres que des composantes d'écho d'un signal direct. Elle trouve une application particulière mais non exclusive dans le domaine des annuleurs d'écho adaptatifs.

Les annuleurs d'écho sont utilisés dans des liaisons bidirectionnelles. Leur but est d'annuler, ou du moins d'atténuer sensiblement, dans le signal circulant dans l'un des deux sens (le signal de retour) les composantes d'écho du signal circulant dans l'autre sens (le signal direct) apparaissant au niveau du site de réception du signal direct. Les échos peuvent être d'origine acoustique, par exemple dans l'application aux postes téléphoniques mains libres, ou d'origine électrique. L'annuleur d'écho comporte habituellement un filtre qui modélise les trajets d'écho au niveau du site de réception du signal direct. Ce filtre reçoit le signal direct, et sa sortie, qui est une estimation des composantes d'écho, est soustraite du signal de retour.

Dans un annuleur d'écho adaptatif, les coefficients du filtre de modélisation sont adaptés en temps réel pour minimiser l'énergie du signal de retour résiduel. Lorsque le signal de retour contient des composantes utiles et non seulement des composantes d'écho du signal direct, il convient de figer la procédure d'adaptation des coefficients pour éviter de dégrader les composantes utiles et pour ne pas provoquer de divergences ou d'oscillations indésirables dans les valeurs des coefficients.

Or, la détection dans le signal de retour de la présence de composantes utiles autres que les composantes d'écho du signal direct se révèle être un problème délicat. On peut certes envisager des calculs de corrélations entre les signaux directs et de retour sur la base desquels pourrait s'effectuer la détection. Mais une telle méthode implique des volumes de calculs considérables, actuellement incompatibles avec les applications pratiques.

L'article de R. MONTAGNA et al. intitulé "A fast adaptive echo canceler with delay estimation for time variant telephone circuits", IEEE Global Telecommunications Conference, vol. 3, 26 novembre 1984, New York, pages 1569-1574, décrit un annuleur d'écho adaptatif comportant un détecteur de double parole, dans lequel la détection de double parole repose sur une simple détection des énergies moyennes du signal direct et du signal de retour.

Le document US-A-4 918 727 décrit un détecteur de double parole pour un annuleur d'écho, dans lequel le système d'annulation d'écho fait intervenir un paramètre ERLE égal au rapport entre l'énergie du signal reçu et l'énergie du signal réémis.

Un but de la présente invention est d'apporter une solution au problème ci-dessus, qui soit réaliste en termes de volume de calculs.

L'invention propose ainsi un procédé pour détecter, dans un signal de retour, la présence de composantes autres que des composantes d'écho d'un signal direct, caractérisé en ce qu'on soumet le signal direct à un filtre de prédiction linéaire à réponse impulsionnelle finie pour déterminer un premier signal résiduel d'énergie minimale, on soumet le signal de retour à un filtre à réponse impulsionnelle finie dont les coefficients sont les mêmes que ceux du filtre de prédiction linéaire du signal direct pour déterminer un second signal résiduel, on calcule le rapport des énergies contenues dans les premier et second signaux résiduels, et on détermine si le signal de retour contient des composantes autres que les composantes d'écho du signal direct en comparant le rapport calculé à un seuil de détection.

La détection repose sur une adaptation des techniques de prédiction linéaire habituellement utilisées pour résoudre des problèmes de compression de l'information. Lorsque le signal de retour ne contient essentiellement que des composantes d'écho du signal direct, le signal direct et le signal de retour sont spectralement voisins, de sorte que le rapport des énergies des signaux résiduels est sensiblement constant à une valeur dépendant de l'amplitude de la réponse des trajets d'écho. Lorsque le signal de retour contient en outre des composantes utiles, le rapport des énergies s'écarte sensiblement de la valeur précédente, dans la mesure où les coefficients communs des filtres, qui sont choisis pour minimiser l'énergie du premier signal résiduel, s'éloignent de ceux qui minimiseraient l'énergie du second signal résiduel. La comparaison du rapport des énergies calculé à un seuil de détection permet donc de discriminer entre les deux situations.

Le recours à une technique de prédiction linéaire implique un volume de calcul très inférieur à la détermination directe de corrélations entre le signal direct et le signal de retour. L'ordre de la prédiction linéaire est typiquement compris entre 5 et 10.

De préférence, la valeur du seuil de détection est adaptée de façon récursive en fonction des valeurs calculées du rapport d'énergie, l'adaptation du seuil de détection étant interrompue lorsqu'on détermine que le signal de retour contient des composantes autres que les composantes d'écho du signal direct et/ou lorsqu'on détecte la présence de composantes utiles dans le signal direct. Cette disposition permet au processus de détection de s'adapter aux variations éventuelles de la réponse des trajets d'écho.

Un dispositif de détection pour la mise en oeuvre du procédé selon l'invention comprend un filtre de prédiction linéaire à réponse impulsionnelle finie recevant le signal direct et produisant un premier signal résiduel d'énergie minimale, un second filtre à réponse impulsionnelle finie ayant les mêmes coefficients que le filtre de prédiction linéaire du signal direct, recevant le signal de retour et produisant un second signal résiduel, des moyens de calcul du rapport des énergies contenues dans les premier et second signaux résiduels, et des moyens de comparaison du rapport d'énergies calculé à un seuil de détection pour déterminer si le signal de retour contient des composantes autres que des composantes d'écho du signal direct.

Un autre aspect de la présente invention concerne un annuleur d'écho adaptatif, pour atténuer, dans un signal de retour, les composantes d'écho d'un signal direct, comprenant un filtre adaptatif de modélisation des trajets d'écho auxquels est adressé le signal direct et dont la sortie est soustraite du signal de retour, caractérisé en ce qu'il comprend en outre un dispositif de détection du type défini ci-dessus, pour détecter la présence dans le signal de retour de composantes autres que les composantes d'écho du signal direct, les coefficients du filtre adaptatif de modélisation étant figés lorsque ledit dispositif de détection révèle présence dans le signal de retour de composantes autres que les composantes d'écho du signal direct.

D'autres particularités et avantages de la présente invention apparaîtront dans la description ci-après d'un exemple de réalisation non limitatif, lue conjointement aux dessins annexés, dans lesquels :

- la figure 1 est un schéma synoptique d'un annuleur d'écho adaptatif incorporant un dispositif de détection selon l'invention ; et
- la figure 2 est un organigramme illustrant les étapes d'un procédé de détection selon l'invention.

L'invention est décrite ci-après dans son application particulière, mais non exclusive, à un annuleur d'écho d'un poste téléphonique de type mains libres. Ce poste émet et reçoit des signaux acoustiques numérisés à une fréquence d'échantillonnage de 8 000 Hz par exemple. Le signal direct $S_d(n)$ est adressé au haut-parleur 5 du poste par l'intermédiaire d'un convertisseur numérique-analogique 6 et d'un amplificateur 7. Le signal de sortie analogique du microphone 8 du poste est amplifié par l'amplificateur 9 puis numérisé par le convertisseur 10 pour former le signal numérique de retour $S_r(n)$.

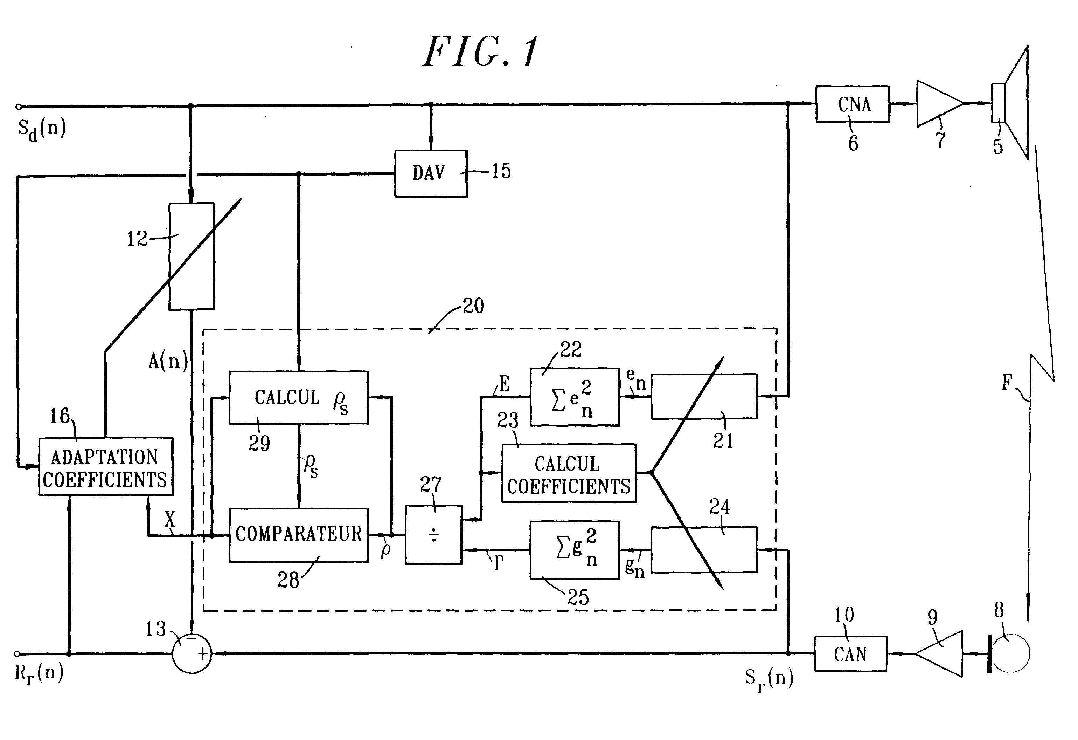

L'annuleur d'écho comprend un filtre de modélisation 12 à réponse impulsionnelle finie qui reçoit les échantillons successifs du signal direct $S_d(n)$, et produit en sortie une estimation A(n) de l'écho du signal direct. Chaque échantillon de l'estimation A(n) est soustrait de l'échantillon correspondant du signal de retour $S_r(n)$ par le soustracteur 13 pour former le signal de retour résiduel $R_r(n)$ dépourvu d'écho. Les coefficients du filtre 12 modélisent la réponse impulsionnelle des trajets d'écho entre le haut-parleur 5 et le microphone 8 (symbolisés par la flèche F sur la figure 1). Le filtre 12 comporte typiquement 2 000 coefficients.

Les coefficients du filtre 12 sont mis à jour de manière adaptative pendant la communication, comme indiqué par le bloc fonctionnel 16 sur la figure 1. L'adaptation consiste à minimiser l'énergie contenue dans le signal de retour résiduel $R_r(n)$. Elle peut se faire de façon classique par un algorithme de moindres carrés tel que l'algorithme du gradient.

L'annuleur d'écho comporte un détecteur d'activité vocale 15 recevant le signal direct $S_d(n)$. Le détecteur d'activité vocale 15 sert à détecter la présence de composantes utiles autres que du bruit dans le signal direct. Les détecteurs d'activité vocale sont bien connus dans le domaine du traitement des signaux acoustiques. On peut en trouver des exemples dans les articles "A voice activity detector based on cepstral analysis" de J. A. Haigh et al (Proc. Eurospeech 1993 - Berlin, Vol. 2, pages 1103-1106), "Speech enhancement using a soft-decision noise suppresssion filter" de R.J. Mc Aulay et al (IEEE Trans. ASSP, Vol. 28, N° 2, pages 137-147, avril 1980), "Modification of piecewise LPC" de J. Roberts (MITRE Working paper WP-21752, Mai 1978), "Evaluation of linear and non-linear spectral subtraction methods for enhancing noisy speech" de A. Le Floc'h et al (ESCA, pages 131-134, Novembre 1992), "Voice activity detection using a periodicity measure" de R. Tucker (IEEE Proc., Vol. 139, N° 4, Août 1992), et "Speech/non-speech detection for voice response systems" de L. Mauuary et al (Proc. Eurospeech 1993 - Berlin, Vol. 2, pages 1097-1100). Le détecteur d'activité vocale 15 est utilisé pour commander les moyens d'adaptation 16, de façon que les coefficients du filtre 12 restent figés lorsqu'aucune composante utile n'est détectée dans le signal direct $S_d(n)$.

L'adaptation des coefficients n'a pas lieu non plus lorsqu'on détecte que le signal de retour $S_r(n)$ contient des composantes autres que les composantes d'écho du signal direct. A cette fin, l'invention prévoit de munir l'annuleur d'écho d'un dispositif de détection 20 permettant de déterminer si le signal de retour contient ou non des composantes autres que les composantes d'écho du signal direct.

Le dispositif de détection 20 comprend un filtre de prédiction linéaire 21 recevant le signal direct $S_d(n)$. Les échantillons de sortie $e_n$ du filtre 21 sont donnés par :

$$e_n = S_d(n) + \sum_{i=1}^{p} a_i S_d(n-i)$$

où p désigne l'ordre de la prédiction linéaire, et $a_i$ ($0 \le i \le p$) désignent les coefficients du filtre de prédiction linéaire, avec $a_0 = 1$ par convention. L'énergie E du signal résiduel $e_n$ sur un bloc de N échantillons du signal direct est calculée dans un accumulateur 22 qui fait la somme des carrés des échantillons $e_n$ du bloc. Les coefficients du filtre 21 sont calculés de manière à minimiser cette énergie calculée E (bloc fonctionnel 23 sur la figure 1). L'algorithme de minimisation utilisé peut également être un algorithme de type moindres carrés tel que l'algorithme du gradient. Les coefficients calculés en 23 sont également utilisés dans un autre filtre à réponse impulsionnelle finie 24 qui traite le signal de retour $S_r(n)$. Les échantillons de sortie $g_n$ du filtre 24 s'écrivent donc :

$$g_n = S_r(n) + \sum_{i=1}^{p} a_i S_r(n-i)$$

L'énergie $\Gamma$ contenue dans le bloc de N échantillons du second signal résiduel $g_n$ est calculée dans un accumulateur 25 qui fait la somme des carrés des échantillons $g_n$ du bloc.

A la fin de chaque bloc de longueur N, un diviseur 27 calcule le rapport d'énergies $\rho = \Gamma/E$. Un comparateur 28 compare la valeur calculée du rapport $\rho$ à un seuil de détection $\rho_s$. Lorsque $\rho > \rho_s$, il est déterminé que le signal de retour $S_r(n)$ contient des composantes autres que les composantes d'écho du signal direct $S_d(n)$. Le comparateur 28 adresse alors aux moyens 16 d'adaptation des coefficients du filtre de modélisation 12 un signal X pour que les coefficients du filtre 12 restent figés lorsque le dispositif 20 a détecté la présence dans le signal de retour de composantes autres que des composantes d'écho du signal direct. Lorsque $\rho \leq \rho_s$, on estime que le signal de retour $S_r(n)$ ne contient pas de composantes utiles et l'adaptation des coefficients du filtre de modélisation 12 a lieu.

Dans la version préférée de l'invention, la valeur du seuil de détection $\rho_s$ est adaptée de façon récursive en fonction des valeurs calculées du rapport $\rho$, comme schématisé par le bloc de calcul 29 sur la figure 1. Mais l'adaptation du seuil de détection $\rho_s$ est interrompue lorsqu'on détermine que le signal de retour $S_r(n)$ contient des composantes autres que les composantes d'écho du signal direct $S_d(n)$. Il faut en effet éviter que la valeur du seuil $\rho_s$ augmente de manière inopportune lorsque le signal de retour contient des composantes utiles, ce qui dégraderait les performances de détection du dispositif 20. De préférence, l'adaptation du seuil de détection $\rho_s$ est également interrompue lorsque le détecteur d'activité vocale 15 révèle la présence de composantes utiles dans le signal direct $S_d(n)$. Dans ce cas, le seuil de détection $\rho_s$ n'est modifiable que lorsqu'il n'y a des composantes utiles ni dans le signal direct ni dans le signal de retour, c'est-à-dire pendant les périodes de silence.

Le calcul du seuil $\rho_s$ comporte une estimation récursive de la valeur moyenne $\rho_{moy}$ des rapports d'énergies $\rho$ calculés pendant les périodes d'adaptation du seuil $\rho_s$, à l'aide d'une fenêtre d'oubli exponentielle :

$$\rho_{moy} = \lambda \rho_{moy} + (1-\lambda)\rho \qquad (1)$$

où $\lambda$ désigne un coefficient d'oubli compris entre 0 et 1. La valeur maximum $\rho_{max}$ des rapports $\rho$ calculés pendant les périodes d'adaptation du seuil $\rho_s$ est également

déterminée, en comparant la valeur courante de $\rho$ à la valeur $\rho_{max}$ mémorisée. La valeur du seuil $\rho_s$ est alors figée lorsqu'on détecte des composantes utiles dans l'un des deux signaux :

$$\rho_s = \rho_{moy} + \alpha \, (\rho_{max} - \rho_{moy}) \qquad (2)$$

où $\alpha$ désigne un second coefficient compris entre 0 et 1. En prenant une valeur $\rho_s$ supérieure à $\rho_{moy}$, on minimise les risques de fausse détection.

Diverses expériences réalisées par les demandeurs ont révélé que les valeurs optimales des coefficients $\alpha$ et $\lambda$ sont comprises entre 0,8 et 0,9. Ces expériences ont montré d'excellentes performances de détection avec un modèle de prédiction linéaire d'ordre $p = 10$ appliqué à des blocs d'échantillons non recouvrants de N = 256 échantillons (soit 32 ms). La méthode a donné des résultats satisfaisants pour des blocs d'analyse variant de N = 64 à N = 256 échantillons avec des ordres de prédiction linéaire p allant de 5 à 10. Des ordres supérieurs à 10 alourdissent la charge de calcul sans apporter d'améliorations significatives.

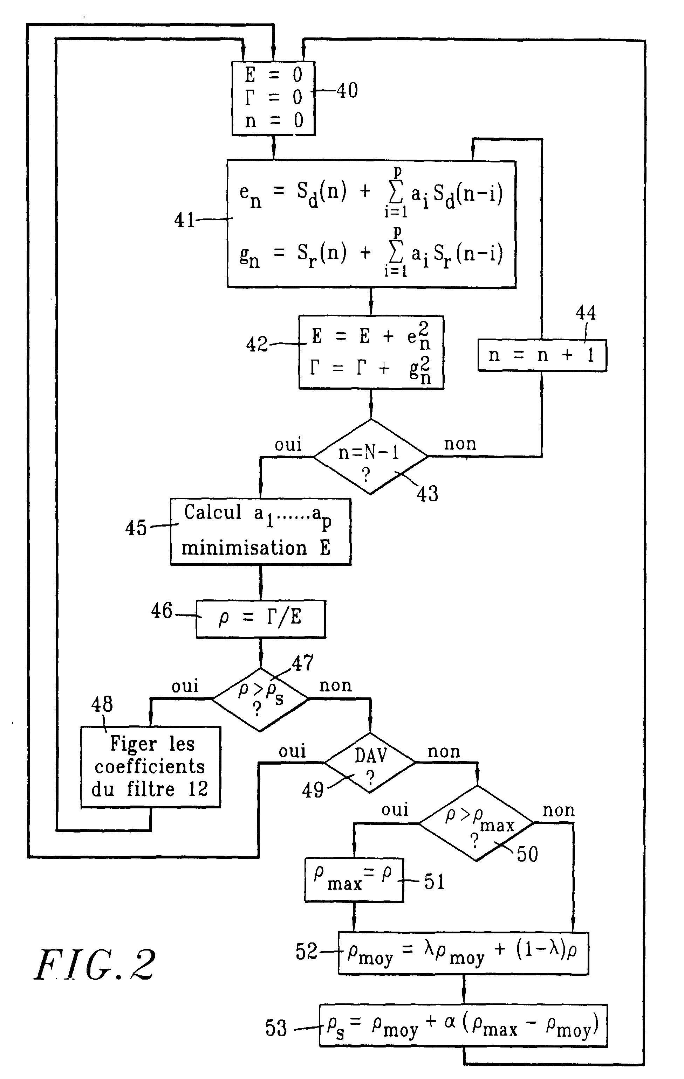

Matériellement, l'annuleur d'écho selon l'invention sera le plus souvent réalisé en programmant de façon appropriée un ou plusieurs processeurs de traitement de signal (DSP). La programmation des parties autres que le dispositif de détection 20 est classique et ne sera pas détaillée davantage. La partie correspondant au dispositif 20 peut être réalisée conformément à l'organigramme représenté sur la figure 2.

Au début du processus, les compteurs E, $\Gamma$ et n sont initialisés à 0 (étape 40). Ensuite, à chaque réception d'un couple d'échantillons $S_d(n)$, $S_r(n)$, les signaux résiduels $e_n$ et $g_n$ sont calculés (étape 41), puis les compteurs E, $\Gamma$ sont incrémentés respectivement de $e_n^2$ et de $g_n^2$ (étape 42). Si l'indice n reste inférieur à N-1 (test 43), on l'incrémente d'une unité (étape 44) pour revenir à l'étape 41 dès réception du couple d'échantillons suivant. Quand n devient égal à N-1, le bloc courant est terminé, et on passe à l'étape 45 de minimisation de l'énergie résiduelle E et de détermination des coefficients $a_l,....,a_p$ des filtres 21, 24. Le rapport $\rho=\Gamma/E$ est alors calculé (étape 46), puis comparé, en 47, au seuil $\rho_s$. Si $\rho > \rho_s$, on décide que le signal de retour $S_r(n)$ contient des composantes autres que des composantes d'écho du signal direct, et on fige les coefficients du filtre de modélisation 12 (étape 48), avant de revenir à l'étape d'initialisation 40 pour le traitement du bloc suivant. Si $\rho \leq \rho_s$, et si le détecteur d'activité vocale 15 révèle des composantes utiles dans le signal direct $S_d(n)$ (test 49), on décide qu'il y a des composantes utiles dans le signal direct mais non dans le signal de retour, et on revient à l'étape d'initialisation 40 pour le traitement du bloc suivant. Dans ce cas, le fonctionnement et l'adaptation des coefficients du filtre de modélisation 12 s'effectuent normalement. Si $\rho \leq \rho_s$ et si le détecteur d'activité vocale 15 ne révèle pas de composantes utiles dans le signal direct S$_d$(n), on décide qu'il n'y a des composantes utiles ni dans le signal direct ni dans le signal de retour, et on exécute le processus d'adaptation du seuil ρ$_s$. Ce processus commence par une comparaison 50 entre le rapport calculé ρ et le rapport maximum mémorisé ρ$_{max}$, suivie, si ρ > ρ$_{max}$, de la mise à jour 51 du maximum ρ$_{max}$. Ensuite, le rapport moyen ρ$_{moy}$ est calculé selon la formule récursive (1) et mémorisé (étape 52), puis le seuil de détection ρ$_s$ est calculé selon la formule (2) (étape 53), et on revient à l'étape d'initialisation 40 pour le traitement du bloc suivant.

## Revendications

1. Procédé pour détecter, dans un signal de retour (S$_r$(n)), la présence de composantes autres que des composantes d'écho d'un signal direct (S$_d$(n)), caractérisé en ce qu'on soumet le signal direct à un filtre de prédiction linéaire à réponse impulsionnelle finie (21) pour déterminer un premier signal résiduel (e$_n$) d'énergie minimale, on soumet le signal de retour à un filtre à réponse impulsionnelle finie (24) dont les coefficients sont les mêmes que ceux du filtre de prédiction linéaire du signal direct pour déterminer un second signal résiduel (g$_n$), on calcule le rapport (ρ) des énergies (Γ,E) contenues dans les premier et second signaux résiduels, et on détermine si le signal de retour contient des composantes autres que les composantes d'écho du signal direct en comparant le rapport calculé à un seuil de détection (ρ$_s$).

2. Procédé selon la revendication 1, caractérisé en ce que la valeur du seuil de détection (ρ$_s$) est adaptée de façon récursive en fonction des valeurs calculées dudit rapport d'énergies (ρ), l'adaptation du seuil de détection (ρ$_s$) étant interrompue lorsqu'on détermine que le signal de retour (S$_r$(n)) contient des composantes autres que les composantes d'écho du signal direct (S$_d$(n)).

3. Procédé selon la revendication 2, caractérisé en ce qu'on interrompt l'adaptation du seuil de détection (ρ$_s$) lorsqu'on détecte la présence de composantes utiles dans le signal direct (S$_d$(n)).

4. Procédé selon la revendication 2 ou 3, caractérisé en ce que, pendant les périodes d'adaptation du seuil de détection (ρ$_s$), on calcule une moyenne ρ$_{moy}$ des rapports d'énergies ρ successivement calculés par une formule récursive de la forme

$$\rho_{moy} = \lambda\, \rho_{moy} + (1-\lambda)\rho$$

où λ désigne un coefficient compris entre 0 et 1, on détermine une valeur maximale ρ$_{max}$ des rapports d'énergies ρ calculés pendant les périodes d'adaptation du seuil de détection (ρ$_s$), et on calcule la valeur du seuil de détection ρ$_s$ par une formule de la forme

$$\rho_s = \rho_{moy} + \alpha(\rho_{max} - \rho_{moy})$$

où α désigne un coefficient compris entre 0 et 1.

5. Procédé selon la revendication 4, caractérisé en ce que les coefficients λ et α sont compris entre 0,8 et 0,9.

6. Procédé selon l'une quelconque des revendications 1 à 5, caractérisé en ce que l'ordre "p" du filtre de prédiction linéaire (21) est compris entre 5 et 10.

7. Dispositif de détection de la présence de composantes autres que des composantes d'écho d'un signal direct (S$_d$(n)) dans un signal de retour (S$_r$(n)), caractérisé en ce qu'il comprend un filtre de prédiction linéaire à réponse impulsionnelle finie (21) recevant le signal direct (S$_d$(n)) et produisant un premier signal résiduel (e$_n$) d'énergie minimale, un second filtre à réponse impulsionnelle finie (24) ayant les mêmes coefficients que le filtre de prédiction linéaire du signal direct, recevant le signal de retour (S$_r$(n)) et produisant un second signal résiduel (g$_n$), des moyens (22,25,27) de calcul du rapport (ρ) des énergies (Γ,E) contenues dans les premier et second signaux résiduels, et des moyens (28) de comparaison du rapport d'énergies calculé à un seuil de détection (ρ$_s$) pour déterminer si le signal de retour contient de composantes autres que les composantes d'écho du signal direct.

8. Dispositif selon la revendication 7, caractérisé par des moyens (29) d'adaptation récursive de la valeur du seuil de détection (ρ$_s$) en fonction des valeurs calculées du rapport d'énergie (ρ), dont le fonctionnement est interrompu lorsque les moyens de comparaison (28) révèlent que le signal de retour (S$_r$(n)) contient des composantes autres que les composantes d'écho du signal direct (S$_d$(n)).

9. Dispositif selon la revendication 8, caractérisé en ce que le fonctionnement des moyens d'adaptation (29) est interrompu lorsque des composantes utiles sont détectées dans le signal direct (S$_d$(n)).

10. Dispositif selon la revendication 8 ou 9, caractérisé en ce que les moyens d'adaptation (29) sont agencés pour déterminer la valeur du seuil de détection (ρ$_s$) selon une formule du type ρ$_s$ = ρ$_{moy}$ + α (ρ$_{max}$ - ρ$_{moy}$) où ρ$_{moy}$ est une moyenne des rapports d'énergies ρ calculés pendant les périodes de fonctionnement des moyens d'adaptation, obtenue par une formule récursive de la forme

$$\rho_{moy} = \lambda\rho_{moy} + (1-\lambda)\rho,$$

$\rho_{max}$ est la valeur maximale du rapport d'énergies calculés pendant les périodes de fonctionnement des moyens d'adaptation, et $\alpha$ et $\lambda$ sont deux coefficients compris entre 0 et 1.

11. Dispositif selon la revendication 10, caractérisé en ce que les coefficients $\alpha$ et $\lambda$ sont compris entre 0,8 et 0,9.

12. Dispositif selon l'une quelconque des revendications 7 à 11, caractérisé en ce que l'ordre "p" du filtre de prédiction linéaire (21) est compris entre 5 et 10.

13. Annuleur d'écho adaptatif, pour atténuer, dans un signal de retour ($S_r(n)$), les composantes d'écho d'un signal direct ($S_d(n)$), comprenant un filtre adaptatif (12) de modélisation des trajets d'écho auquel est adressé le signal direct et dont la sortie est soustraite du signal de retour, caractérisé en ce qu'il comprend en outre un dispositif de détection (20) selon l'une quelconque des revendication 7 à 12 pour détecter la présence dans le signal de retour ($S_r(n)$) de composantes autres que les composantes d'écho du signal direct ($S_d(n)$), les coefficients du filtre adaptatif de modélisation (12) étant figés lorsque ledit dispositif de détection révèle la présence dans le signal de retour de composantes autres que les composantes d'écho du signal direct.

**Patentansprüche**

1. Verfahren zum Erfassen des Vorkommens von anderen Komponenten in einem Rückkehrsignal ($S_r(n)$) als den Echokomponenten eines direkten Signals ($S_d(n)$), dadurch gekennzeichnet, daß man das direkte Signal einem linearen Prädiktionsfilter mit endlicher Impulsantwort (21) unterwirft, um ein erstes Restsignal ($e_n$) mit minimaler Energie zu bestimmen, daß man das Rückkehrsignal einem Filter mit endlicher Impulsantwort (24) unterwirft, dessen Koeffizienten die gleichen sind wie jene des linearen Prädiktionsfilters des direkten Signals, um ein zweites Restsignal ($g_n$) zu bestimmen, daß man das Verhältnis (p) der im ersten und im zweiten Restsignal enthaltenen Energien ($\Gamma$, E) berechnet, und daß man bestimmt, ob das Rückkehrsignal andere Komponenten als die Echokomponenten des direkten Signals enthält, indem man das berechnete Verhältnis mit einer Erfassungsschwelle ($\rho_s$) ver-

gleicht.

2. Verfahren nach Anspruch 1, dadurch gekennzeichnet, daß der Wert der Erfassungsschwelle ($\rho_s$) in rekursiver Weise als Funktion der berechneten Werte des Energieverhältnisses ($\rho$) angepaßt wird, wobei die Anpassung der Erfassungsschwelle ($\rho_s$) unterbrochen wird, wenn bestimmt wird, daß das Rückkehrsignal ($S_r(n)$) andere Komponenten als die Echokomponenten des direkten Signals ($S_d(n)$) enthält.

3. Verfahren nach Anspruch 2, dadurch gekennzeichnet, daß man die Anpassung der Erfassungsschwelle ($\rho_s$) unterbricht, wenn man das Vorkommen von Nutzkomponenten im direkten Signal ($S_d(n)$) erfaßt.

4. Verfahren nach Anspruch 2 oder 3, dadurch gekennzeichnet, daß man während der Perioden der Anpassung der Erfassungsschwelle ($\rho_s$) einen Mittelwert $\rho_{moy}$ der nacheinander berechneten Energieverhältnisse (p) mittels einer rekursiven Formel der Gestalt

$$\rho_{moy} = \lambda\rho_{moy} + (1-\lambda)\rho$$

berechnet, wobei $\lambda$ einen zwischen 0 und 1 enthaltenen Koeffizienten bezeichnet, daß man einen Maximalwert $\rho_{max}$ der während der Perioden der Anpassung der Erfassungsschwelle ($\rho_s$) berechneten Energieverhältnisse $\rho$ bestimmt, und daß man den Wert der Erfassungsschwelle $\rho_s$ durch eine Formel der Gestalt

$$\rho_s = \rho_{moy} + \alpha(\rho_{max} - \rho_{moy})$$

berechnet, in der $\alpha$ einen zwischen 0 und 1 enthaltenen Koeffizienten bezeichnet.

5. Verfahren nach Anspruch 4, dadurch gekennzeichnet, daß die Koeffizienten $\lambda$ und $\alpha$ zwischen 0,8 und 0,9 enthalten sind.

6. Verfahren nach einem der Ansprüche 1 bis 5, dadurch gekennzeichnet, daß die Ordnung "p" des linearen Prädiktionsfilters (21) zwischen 5 und 10 enthalten ist.

7. Vorrichtung zur Erfassung des Vorkommens von anderen Komponenten als den Echokomponenten eines direkten Signals ($S_d(n)$) in einem Rückkehrsignal ($S_r(n)$), dadurch gekennzeichnet, daß sie ein lineares Prädiktionsfilter mit endlicher Impulsantwort (21) umfaßt, das das direkte Signal ($S_d(n)$) empfängt und ein erstes Restsignal ($e_n$) mit mini-

maler Energie erzeugt, daß sie ein zweites Filter mit endlicher Impulsantwort (24) umfaßt, welches die gleichen Koeffizienten aufweist wie das lineare Prädiktionsfilter des direkten Signals und das Rückkehrsignal ($S_r(n)$) empfängt und ein zweites Restsignal ($g_n$) erzeugt, daß sie Mittel (22, 25, 27) zur Berechnung des Verhältnisses ($\rho$) der im ersten und im zweiten Restsignal enthaltenen Energien ($\Gamma$, E) umfaßt, und daß sie Mittel (28) zum Vergleichen des berechneten Energieverhältnisses mit einer Erfassungsschwelle ($\rho_s$) umfaßt, um zu bestimmen, ob das Rückkehrsignal andere Komponenten als die Echokomponenten des direkten Signals enthält.

8. Vorrichtung nach Anspruch 7, gekennzeichnet durch Mittel (29) zur rekursiven Anpassung des Werts der Erfassungsschwelle ($\rho_s$) als Funktion der berechneten Werte des Energieverhältnisses ($\rho$), deren Arbeit unterbrochen wird, wenn die Vergleichsmittel (28) feststellen, daß das Rückkehrsignal ($S_r(n)$) anaere Komponenten als die Echokomponenten des direkten Signals ($S_d(n)$) enthält.

9. Vorrichtung nach Anspruch 8, dadurch gekennzeichnet, daß die Arbeit der Anpassungsmittel (29) unterbrochen wird, wenn im direkten Signal ($S_d(n)$) Nutzkomponenten erfaßt werden.

10. Vorrichtung nach Anspruch 8 oder 9, dadurch gekennzeichnet, daß die Anpassungsmittel (29) dazu ausgelegt sind, den Wert der Erfassungsschwelle ($\rho_s$) gemäß einer Formel des Typs $\rho_s = \rho_{moy} + \alpha (\rho_{max} - \rho_{moy})$ zu bestimmen, wobei $\rho_{moy}$ ein Mittelwert der während der Arbeitsperioden der Anpassungsmittel berechneten Energieverhältnisse $\rho$ ist, der durch eine rekursive Formel der Gestalt

$$\rho_{moy} = \lambda\, \rho_{moy} + (1-\lambda)\rho$$

erhalten ist, wobei $\rho_{max}$ der Maximalwert der während der Arbeitsperioden der Anpassungsmittel berechneten Energieverhältnisse $\rho$ ist, und wobei $\alpha$ und $\lambda$ zwei zwischen 0 und 1 enthaltene Koeffizienten sind.

11. Vorrichtung nach Anspruch 10, dadurch gekennzeichnet, daß die Koeffizienten $\alpha$ und $\lambda$ zwischen 0,8 und 0,9 enthalten sind.

12. Vorrichtung nach einem der Ansprüche 7 bis 11, dadurch gekennzeichnet, daß die Ordnung "p" des linearen Prädiktionsfilters (21) zwischen 5 und 10 enthalten ist.

13. Adaptiver Echokompensierer zum Schwächen der Echokomponenten eines direkten Signals ($S_d(n)$) in einem Rückkehrsignal ($S_r(n)$), umfassend ein adap-
tives Filter (12) zur Modellierung der Echowege, dem das direkte Signal zugeführt wird und dessen Ausgabe vom Rückkehrsignal subtrahiert wird, dadurch gekennzeichnet, daß er ferner eine Erfassungsvorrichtung (20) nach einem der Ansprüche 7 bis 12 umfaßt, um das Vorkommen von anderen Komponenten als den Echokomponenten des direkten Signals ($S_d(n)$) im Rückkehrsignal ($S_r(n)$) zu erfassen, wobei die Koeffizienten des adaptiven Modellierungsfilters (12) festgehalten werden, wenn die Erfassungsvorrichtung das Vorkommen von anderen Komponenten als den Echokomponenten des direkten Signals im Rückkehrsignal feststellt.

## Claims

1. A method for detecting, in a return signal ($S_r(n)$), the presence of components other than echo components from a forward signal ($S_d(n)$), characterized in that the forward signal is submitted to a finite-impulse-response linear-prediction filter in order to determine a first residual signal ($e_n$) of minimal energy, the return signal is submitted to a finite-impulse-response filter the coefficients of which are the same as those of the linear-prediction filter of the forward signal in order to determine a second residual signal ($g_n$), the ratio ($\rho$) of the energies ($\Gamma$,E) contained in the first and second residual signals is calculated, and it is determined whether the return signal contains components other than the echo components from the forward signal by comparing the calculated ratio with a detection threshold ($\rho_s$).

2. The method as claimed in claim 1, characterized in that the value of the detection threshold ($\rho_s$) is adapted recursively on the basis of the calculated values of the said energy ratio ($\rho$) the adapting of the detection threshold ($\rho_s$) being interrupted when it is determined that the return signal ($S_r(n)$) contains components other than the echo components of the forward signal ($S_d(n)$).

3. The method as claimed in claim 2, characterized in that the adapting of the detection threshold ($\rho_s$) is interrupted when the presence of useful components is detected in the forward signal ($S_d(n)$).

4. The method as claimed in claim 2 or 3, characterized in that, during the periods of adapting of the detection threshold ($\rho_s$) an average $\rho_{av}$ of the successively calculated energy ratios $\rho$ is calculated by a recursive formula of the form

$$\rho_{av} = \lambda\rho_{av} + (1-\lambda)\rho$$

where $\lambda$ designates a coefficient lying between 0 and 1, a maximum value $\rho_{max}$ of the energy ratios $\rho$ is calculated, which ratios are calculated during the periods of adapting of the detection threshold ($\rho_s$), and the value of the detection threshold $\rho_s$ is calculated by a formula of the form

$$\rho_s = \rho_{av} + \alpha(\rho_{max} - \rho_{av})$$

where $\alpha$ designates a coefficient lying between 0 and 1.

5. The method as claimed in claim 4, characterized in that the coefficients $\lambda$ and $\alpha$ lie between 0.8 and 0.9.

6. The method as claimed in any one of claims 1 to 5, characterized in that the order "p" of the linear-prediction filter lies between 5 and 10.

7. A device for detecting the presence of components other than echo components from a forward signal ($S_d(n)$) in a return signal ($S_r(n)$), characterized in that it comprises a finite-impulse-response linear-prediction filter receiving the forward signal ($S_d(n)$) and producing a first residual signal ($e_n$) of minimal energy, a second finite-impulse-response filter having the same coefficients as the linear-prediction filter of the forward signal, receiving the return signal ($S_r(n)$) and producing a second residual signal ($g_n$), means for calculating the ratio ($\rho$) of the energies ($\Gamma$, E) contained in the first and second residual signals, and means for comparing the calculated energy ratio to a detection threshold ($\rho_s$) in order to determine whether the return signal contains components other than the echo components from the forward signal.

8. The device as claimed in claim 7, characterized by means for recursive adapting of the value of the detection threshold ($\rho_s$) depending on the calculated values of the energy ratio ($\rho$), the operation of which is interrupted when the comparison means reveal that the return signal ($S_r(n)$) contains components other than the echo components from the forward signal ($S_d(n)$).

9. The device as claimed in claim 8, characterized in that the operation of the adapting means is interrupted when useful components are detected in the forward signal ($S_d(n)$).

10. The device as claimed in claim 8 or 9, characterized in that the adapting means are configured to determine the value of the detection threshold ($\rho_s$) according to a formula of the type $\rho_s = \rho_{av} + \alpha (\rho_{max} - \rho_{av})$
where $\rho_{av}$ is an average of the energy ratios

$\rho$ calculated during the operating periods of the adapting means, obtained by a recursive formula of the form

$$\rho_{av} = \lambda\rho_{av} + (1-\lambda)\rho$$

$\rho_{max}$ is the maximum value of the energy ratios $\rho$ calculated during the operating periods of the adapting means, and $\alpha$ and $\lambda$ are two coefficients lying between 0 and 1.

11. The device as claimed in claim 10, characterized in that the coefficients $\alpha$ and $\lambda$ lie between 0.8 and 0.9.

12. The device as claimed in any one of claims 7 to 11, characterized in that the order "p" of the linear-prediction filter (21) lies between 5 and 10.

13. An adaptive echo canceller, for attenuating, in a return signal ($S_r(n)$), the echo components from a forward signal ($S_d(n)$), comprising an adaptive filter for modeling the echo paths to which the forward signal is addressed and the output of which is subtracted from the return signal, characterized in that it further comprises a detection device according to any one of claims 7 to 12 for detecting the presence in the return signal ($S_r(n)$) of components other than the echo components from the forward signal ($s_d(n)$), the coefficients of the adaptive modeling filter being fixed when said detection device reveals the presence in the return signal of components other than the echo components from the forward signal.

# FIG. 1

EP 0 666 655 B1

$$E = 0$$
$$\Gamma = 0 \qquad \text{—}40$$
$$n = 0$$

$$41 \text{—} \quad e_n = S_d(n) + \sum_{i=1}^{p} a_i S_d(n-i)$$

$$g_n = S_r(n) + \sum_{i=1}^{p} a_i S_r(n-i)$$

$$42 \text{—} \quad E = E + e_n^2$$
$$\Gamma = \Gamma + g_n^2$$

$$44$$
$$n = n + 1$$

$$n = N-1 \; ? \qquad \text{oui} \qquad \text{non}$$
$$43$$

$$45 \text{—} \quad \text{Calcul } a_1 \ldots a_p$$
$$\text{minimisation } E$$

$$46 \text{—} \quad \rho = \Gamma / E$$

$$47$$
$$\rho > \rho_s \; ? \qquad \text{oui} \qquad \text{non}$$

$$48$$
Figer les coefficients du filtre 12

$$\text{DAV} \; ? \qquad \text{oui} \qquad \text{non}$$
$$49$$

$$\rho > \rho_{max} \; ? \qquad \text{oui} \qquad \text{non}$$
$$50$$

$$\rho_{max} = \rho \text{—} 51$$

*FIG.2*

$$52 \text{—} \quad \rho_{moy} = \lambda \rho_{moy} + (1-\lambda)\rho$$

$$53 \text{—} \quad \rho_s = \rho_{moy} + \alpha \left( \rho_{max} - \rho_{moy} \right)$$